# EUROPEAN PATENT SPECIFICATION

(11) **EP 4 201 287 B1**
(45) Date of publication and mention of the grant of the patent: **26.06.2024**
(21) Application number: 22214800.9
(22) Date of filing: 20.12.2022
(51) Int. Cl.: A47L 9/00

(54) **TUBE ARRANGEMENT AND TELESCOPIC EXTENSION FOR AN ELECTRIC HOUSEHOLD APPLIANCE COMPRISING SUCH A TUBE ARRANGEMENT**
ROHRANORDNUNG UND TELESKOPISCHE VERLÄNGERUNG FÜR EIN ELEKTRISCHES HAUSHALTSGERÄT MIT SOLCH EINER ROHRANORDNUNG
AGENCEMENT DE TUBE ET EXTENSION TÉLESCOPIQUE POUR UN APPAREIL ÉLECTROMÉNAGER COMPRENANT UN TEL AGENCEMENT DE TUBE

(30) Priority: 22.12.2021 IT 202100032213
(43) Date of publication of application: 28.06.2023
(73) Proprietor: OMEC S.r.l., 21055 Gorla Minore (VA) (IT)
(72) Inventor: CANALE, Stefano, 21055 Gorla Minore (IT)
(74) Representative: Colombo, Stefano Paolo

(56) References cited:
- EP-A1- 0 520 534
- EP-A1- 0 987 976
- EP-A1- 3 210 515
- EP-B1- 0 987 976

## Description

### BACKGROUND

The present invention relates to the sector of electric household appliances and in particular to the sector of tubes and telescopic extensions for an electric household appliance, such as a vacuum cleaner, a drum vacuum cleaner, an electric broom, a carpet cleaner, a cyclone vacuum cleaner or a similar apparatus. The present invention relates more particularly to a telescopic extension in which the outer tube may be separated from the inner tube. The present invention also relates to an electric household appliance comprising such a telescopic tube.

### PRIOR ART

Telescopic extensions for electric household appliances are known, in which an inner tube and an outer tube are configured to slide in a sealed manner one inside the other and assume a plurality of positions between a completely closed configuration and a completely extended configuration.

EP 1,092,383, WO 02/38026 A1, EP 3,210,515 A1, EP 0,987,976 A1 and EP 0,520,534 A1 describe telescopic extensions for an electric household appliance.

Based on the suction direction in a telescopic extension an input end and an output end are identified. The input end is typically removably fixed to a suction tool such as a so-called vacuum cleaner brush or vacuum cleaner nozzle (or head). The brush slides over the surface to be cleaned and sucks up solids or liquids such as dust, debris, crumbs or water. The material sucked up from the ground enters into the telescopic extension through the input end and exits the telescopic extension through the output end. Downstream of the telescopic extension the material sucked up from the ground is collected, passing optionally through another tube, for example a rigid or flexible tube of the spiralled type.

Similarly, depending on the suction direction, an input end and an output end are also identified for the inner tube and outer tube. In fact, the input end of the inner tube corresponds to the input end of the telescopic extension and the output end of the outer tube coincides with the output end of the telescopic extension.

A known telescopic extension, as mentioned above, comprises an inner tube and an outer tube. The minimum dimension of a telescopic extension is that defined when the inner tube is completely retracted inside the outer tube.

### SUMMARY OF THE INVENTION

The inventor has observed that, typically, the telescopic extension is supplied together with a vacuum cleaner. In other words, the telescopic extension forms part of the primary equipment of a vacuum cleaner. The minimum dimension of a telescopic extension therefore influences the dimensions of the packaging inside which a vacuum cleaner is inserted for despatch from the production site to the public sales outlet.

Often, the height of the vacuum cleaner is smaller than the length of the telescopic extension also when the latter is closed, namely when the inner tube is completely retracted inside the outer tube.

The abovementioned problem occurs, in particular, for example, when the telescopic extension has curved sections, for example a form with a double curvature.

The dimensions of a telescopic extension are also important following purchase by a user since the user must store the vacuum cleaner in a space which is also able to accommodate the telescopic extension. If the telescopic extension is long, a correspondingly large space is required.

The inventor has defined the object of solving, at least partly, the aforementioned problems and providing a telescopic extension in which the two main components, namely the inner tube and the outer tube, can if necessary be separated from each other.

According to a first aspect of the present invention, a tube arrangement is provided, said arrangement comprising:
a) an inner tube and
b) an outer tube
   wherein the inner tube and the outer tube are telescopically slidable relative to one another,
   wherein the inner tube comprises, on an outer surface thereof, a longitudinal groove and a plurality of deformations having a predetermined shape;
c) a sleeve fitted into said outer tube, at one of its ends;
d) a fastening device configured to prevent sliding of the inner tube with respect to the outer tube, when said fastening device is at least partially engaged in one of said deformations;
e) a slider and elastic means, wherein the slider cooperates with the fastening device under the action of the elastic means; and
f) an actuating device operatively connected to the slider,
wherein the longitudinal groove forms, at one end of the inner tube, a slide inclined towards the longitudinal axis of the inner tube for separating the inner tube from the outer tube, and wherein the tube arrangement also comprises a retaining member for preventing accidental separation of the inner tube from the outer tube.

The retaining member may also comprise a tooth projecting outwards from the inner tube.

The tooth may be arranged in a position diametrically opposite the longitudinal groove.

The inner tube may be connected to an accessory for a vacuum cleaner.

According to another aspect, the present invention relates to a telescopic extension for a vacuum cleaner comprising a tube arrangement as described above.

According to another aspect, the present invention relates to a vacuum cleaner comprising a telescopic extension of the aforementioned type and/or a tube arrangement of the type described above.

### BRIEF DESCRIPTION OF THE DRAWINGS

The present invention will become clear from the following detailed description of examples of embodiment, to be read with reference to the attached figures, in which:
- Fig. 1 is an axonometric view of an example of embodiment of a telescopic extension in its completely open or extended configuration;
- Fig. 2 is an axonometric view of the telescopic extension of claim 1 in its completely closed or retracted configuration;
- Fig. 3 is an exploded view of the telescopic extension according to Figures 1 and 2;
- Fig. 4 is a side view of the telescopic extension according to Figures 1 and 2 in the disassembled condition;
- Fig. 4.1, Fig. 4.2 and Fig. 4.3 are further views, on a larger scale, of the inner tube;
- Fig. 5 is a view, on a larger scale, of the output section of the inner tube and the input section of the outer tube;
- Fig. 6 is an axonometric view of a sleeve suitable for the telescopic extension of the invention;
- Fig. 7 is a cross-section though a portion of the telescopic extension according to Figures 1 and 2;
- Fig. 8 is a cross-section through a portion of the inner tube which shows the sealing gasket on the inner tube, called "mushroom" and Fig. 8.1 is an enlarged detail of Fig. 8; and
- Fig. 9 shows the connection between a tube and an accessory according to the solution of the present invention.

### DESCRIPTION OF EXAMPLES

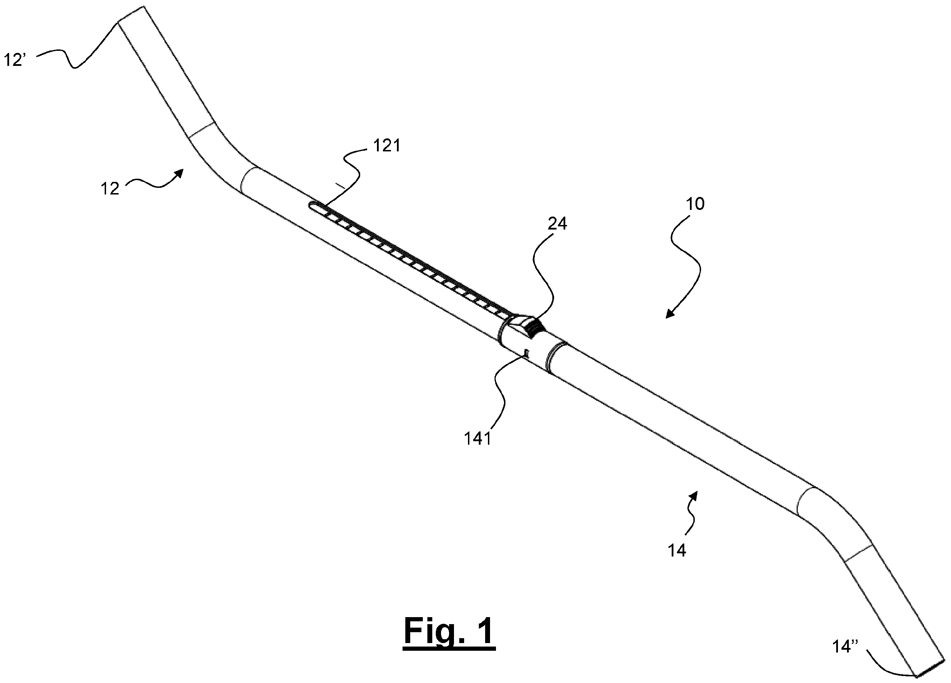

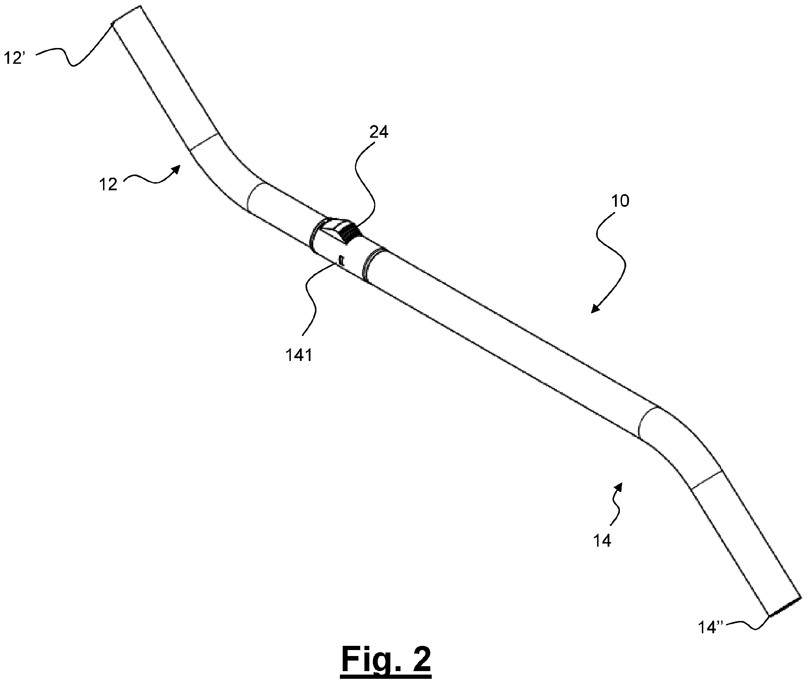

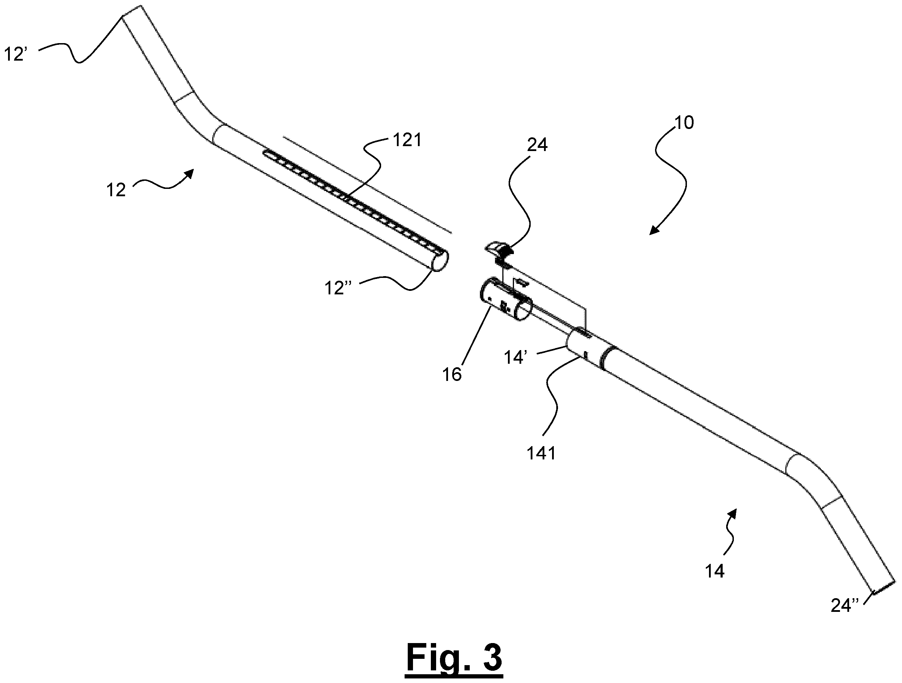

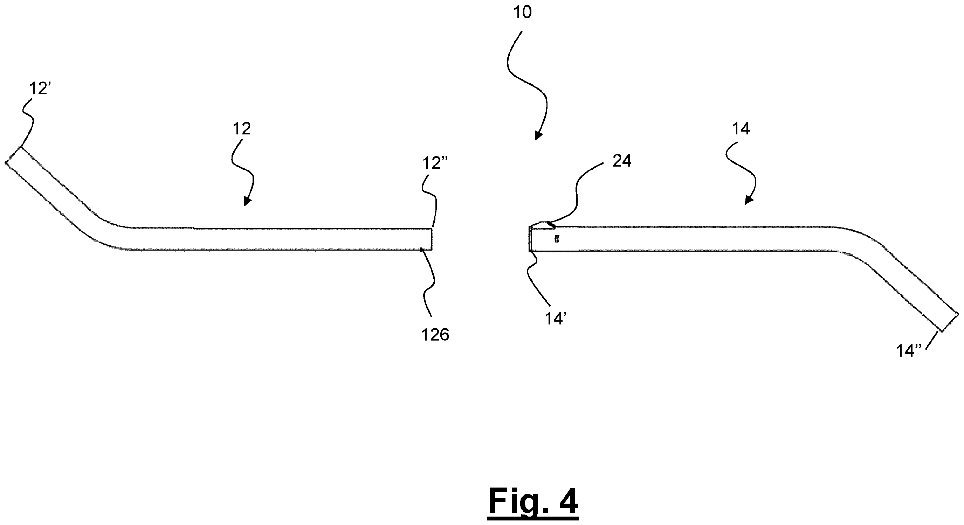

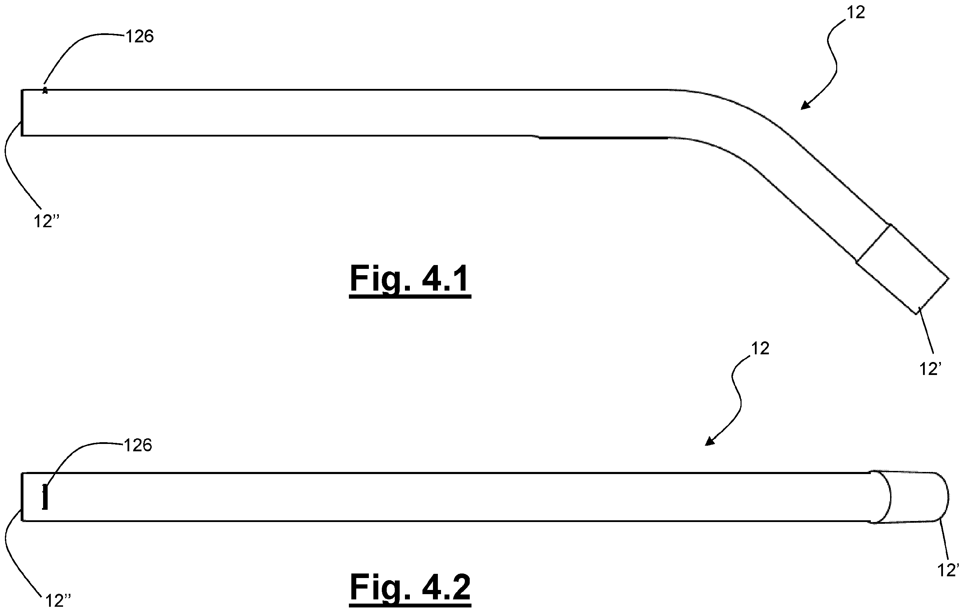

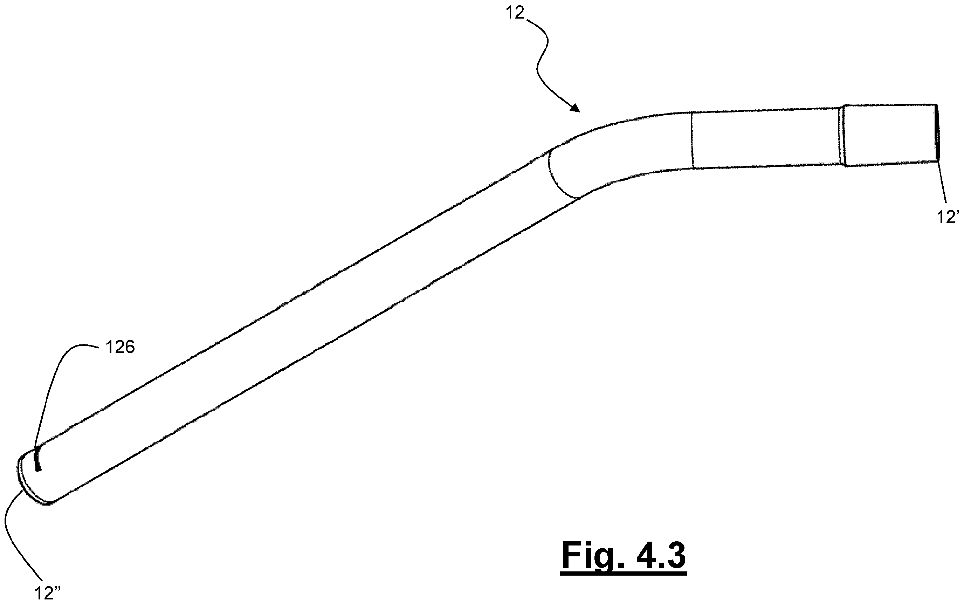

Figures 1-4, 4.1, 4.2 and 4.3 show an embodiment of a telescopic extension according to the present invention. The telescopic extension 10 comprises an inner tube 12 and an outer tube 14, a sleeve 16 with a mechanism for locking the outer tube and the inner tube relative to each other in a plurality of predetermined positions. By way of example, when the telescopic extension is mounted, it forms a double curve. This form allows a certain type of use, but results in the telescopic extension being awkward and bulky even when it is completely closed (Fig. 2).

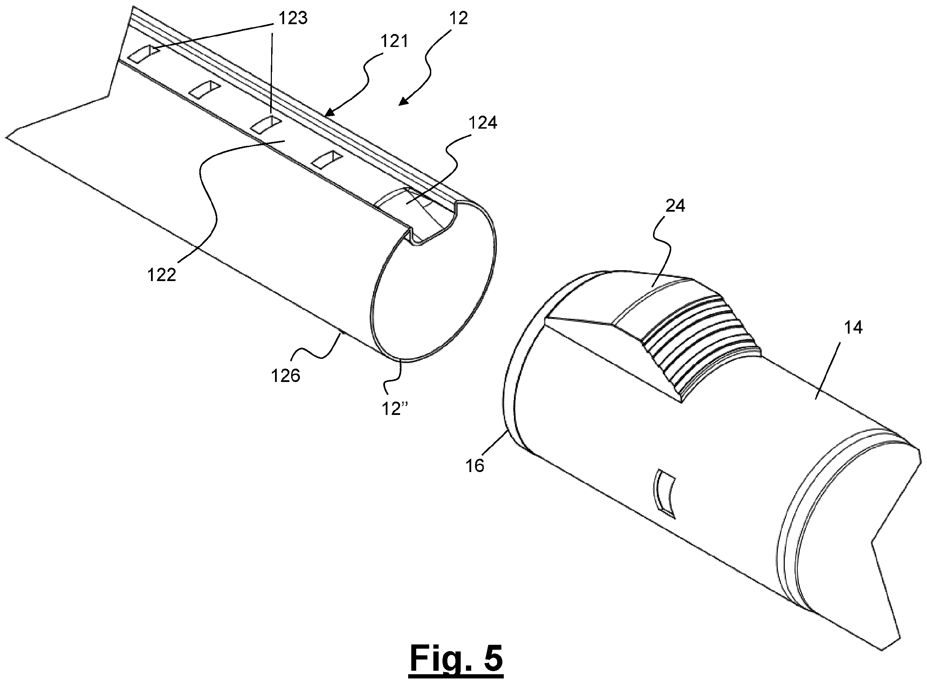

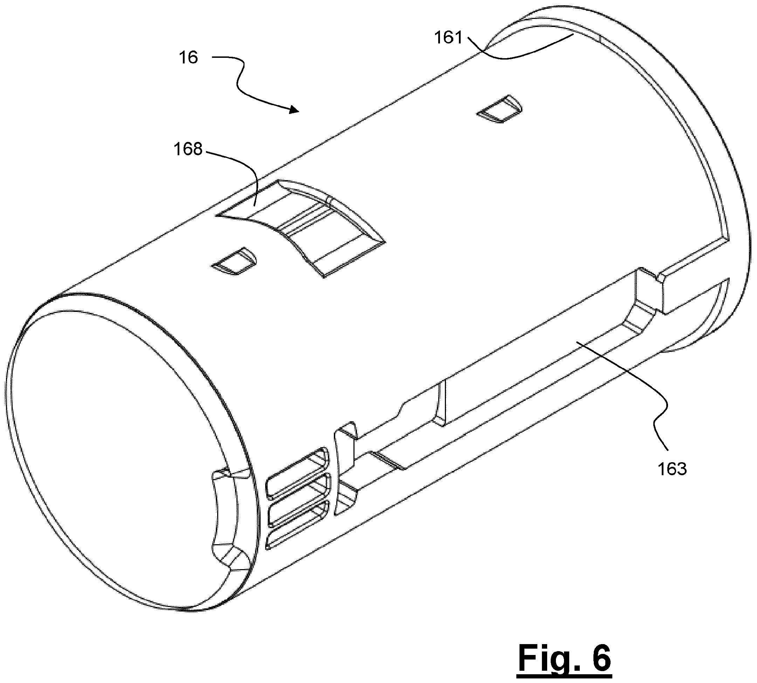

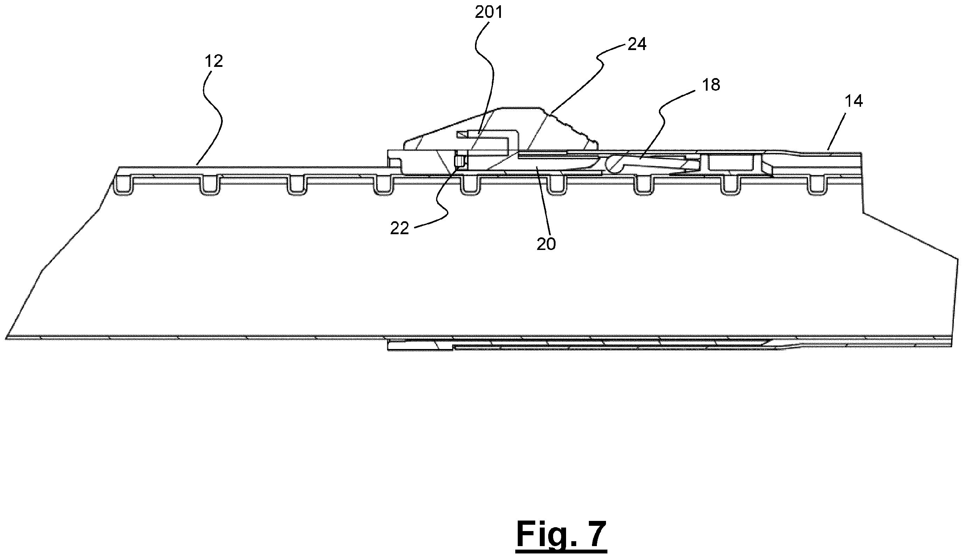

As shown in Figures 5, 6 and 7, a sleeve 16 is mounted on the outer tube 14 and is interposed between the inner tube 12 and the outer tube 14. The sleeve 16 comprises a fastening member 18, a pushing slider 20, an elastic member 22 and an actuating device 24.

The inner and outer tubes 12 and 14 are slidable in a sealed manner one inside the other. Preferably a sealing gasket 26 may be inserted between the inner tube 12 and the outer tube 14. The tubes 12 and 14 are made, for example, of chrome-plated or externally painted sheet stainless steel. Alternatively, they may be made of any metal.

The inner tube 12 has a first end (or input end) 12' and a second end (or output end) 12". The outer tube 14 has a first end (or input end) 14' and a second end (or output end) 14". The telescopic extension 10 therefore has as input end the input end 12' of the inner tube 12 and as output end the output end 14" of the outer tube 14.

The inner tube 12 has preferably a longitudinal groove 121, which is substantially parallelepiped-shaped, with a bottom wall 122 in which a row of notches 123 is formed. Preferably, the notches 123 have a partially cylindrical form and are configured to house a portion of the fastening member 18, as will be described below.

The sleeve 16 is designed to be inserted in the input end 14' of the outer tube 14. Preferably, the sleeve 16 comprises a substantially cylindrical body with a circular reinforcing collar 161 at its input end.

Preferably, the sleeve 16 comprises a longitudinal cavity 163.

Preferably, the fastening member 18 comprises a metal plate shaped in the form of a T or double T.

The slider 20 comprises a projecting part 201 configured to engage with the actuating member 24 which may be for example a shaped button for pushing the slider in one direction or the opposite direction.

Preferably, the sleeve 16 also comprises one or more openings 168 for cooperating with one or more corresponding saw teeth 141 present in the wall of the outer tube 14 and locking the sleeve to the outer tube, preventing it from coming out. Preferably there are two diametrically opposite openings 168 and two saw teeth 141.

According to the present invention, the longitudinal groove 121 is substantially flat over its entire length, but is inclined downwards (namely towards the centre of the inner tube) and forms a slide 124 at the output end 12" of the inner tube 12. This makes it possible to separate completely the inner tube 12 from the outer tube 14. Obviously, the connection between outer tube and inner tube is reversible and the two tubes may be connected together again.

Fig. 5 shows the output end 12" of the inner tube 12 with the end section of the groove 121 which forms the slide 124. The inclined wall of the slide may have a length of a few millimetres, for example 5-10 mm.

In order to prevent a user from accidentally extracting the inner tube 12 from the outer tube 14, advantageously a retaining member is provided. The retaining member 126 forces the user to exert a greater force in order to overcome the resistance of the retaining member. For example, the retaining member 126 could comprise one or more teeth projecting outwards from the inner tube. For example, the retaining member 126 could comprise a - preferably rounded - tooth projecting outwards from the inner tube 12 in a position diametrically opposite to the groove 121.

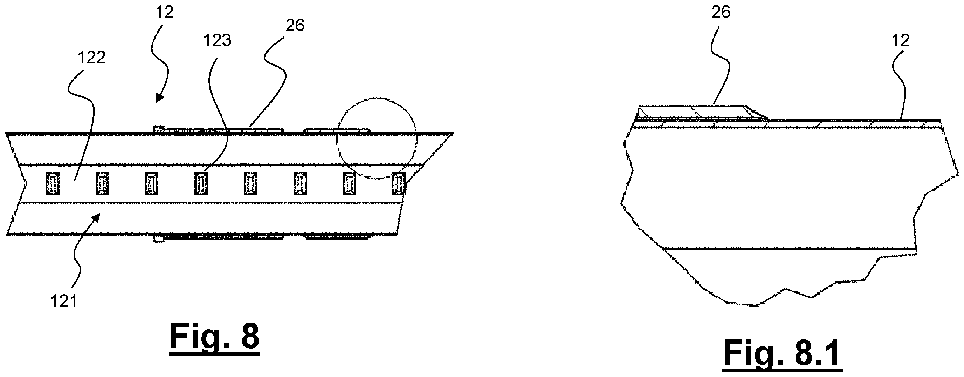

Figures 8 and 8.1 show the sealing gasket 26 (also called "mushroom") between the outer tube and the inner tube.

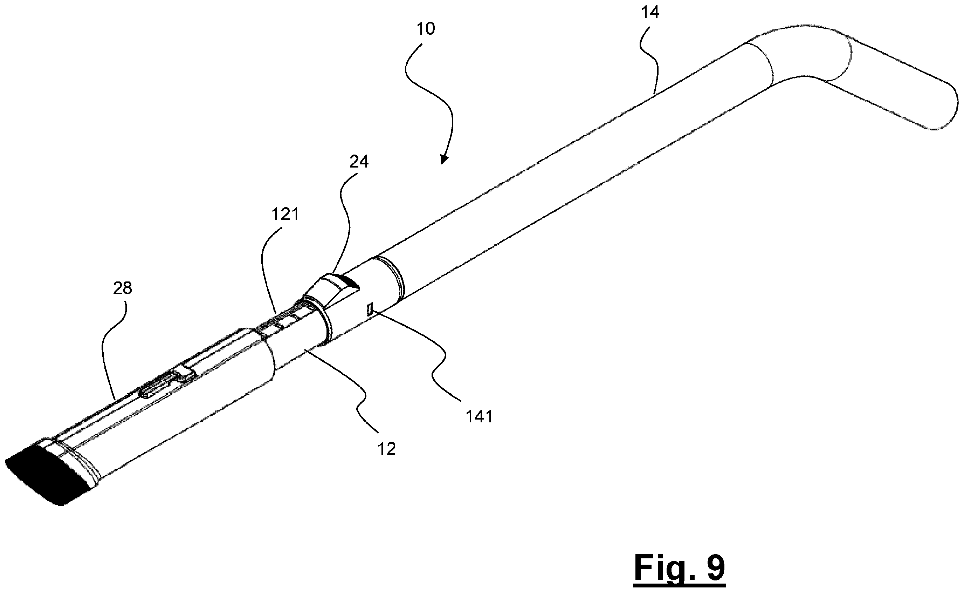

Figure 9 shows an accessory for a vacuum cleaner. The accessory 28 comprises a small brush, the opposite end of which is shaped substantially like the inner tube of the telescopic extension of Figures 1 and 2. Basically, the output end of the accessory 28 comprises a tube section with a groove 121 having one or more recesses. According to preferred embodiments, a retaining member is provided for indicating to the user that the accessory is being separated from the outer tube.

## Claims

1. A tube arrangement (10) comprising:
a) an inner tube (12) and
b) an outer tube (14)
wherein said inner tube (12) and said outer tube (14) are telescopically slidable relative to each other,
wherein said inner tube (12) comprises, on its outer surface, a longitudinal groove (121) and a plurality of deformations (123) having a predetermined shape;
c) a sleeve (16) fitted into said outer tube (14), at one of its ends (14');
d) a fastening device (18) configured to prevent the sliding of the inner tube (12) with respect to the outer tube (14), when said fastening device (18) is engaged at least partially in one of said deformations (123);
e) a slider (20) and elastic means (22), wherein said slider (20) cooperates with said fastening device (18) under the action of said elastic means (22); **characterized in that** arrangement of tubes further comprises
f) an actuating device (24) operatively connected to said slider (20),
wherein said longitudinal groove (121) forms, at an end (12") of the inner tube (12), a slide (124) inclined towards the longitudinal axis of the inner tube (12) for separating the inner tube (12) from the outer tube (14).

2. The tube arrangement of claim 1, further comprising a retaining member (126) for preventing accidental separation of the inner tube (12) from the outer tube (14).

3. The tube arrangement of claim 2, wherein said retaining member comprises a tooth (126) protruding outwards from the inner tube (12).

4. The tube arrangement of claim 3, wherein said tooth is disposed in a position diametrically opposite to the longitudinal groove (121).

5. The tube arrangement of claim 1, wherein the inner tube (12) is connected to an accessory (28) for a vacuum cleaner.

6. A telescopic extension (10) for a vacuum cleaner comprising a tube arrangement according to any one of claims 1-4.

7. A vacuum cleaner comprising a telescopic extension (10) according to claim 6 and/or a tube arrangement according to claim 5.

## Patentansprüche

1. Rohranordnung (10) mit:
a) einem Innenrohr (12) und
b) einem Außenrohr (14),
wobei das Innenrohr (12) und das Außenrohr (14) teleskopisch verschiebbar relativ zueinander sind,
wobei das Innenrohr (12) an seiner Außenfläche eine Längsnut (121) und eine Vielzahl von Verformungen (123) mit einer vorgegebenen Form aufweist;
c) einer Hülse (16), die an einem ihrer Enden (14') in das Außenrohr (14) eingepasst ist;
d) einer Befestigungsvorrichtung (18), die ausgebildet ist, um das Verrutschen des Innenrohrs (12) gegenüber dem Außenrohr (14) zu verhindern, wenn die Befestigungsvorrichtung (18) zumindest teilweise in eine der Verformungen (123) eingreift;
e) einem Schieber (20) und elastischen Mitteln (22), wobei der Schieber (20) mit der Befestigungsvorrichtung (18) unter der Wirkung der elastischen Mittel (22) zusam menwirkt;
**dadurch gekennzeichnet,**
**dass** die Rohranordnung weiterhin aufweist:
f) eine mit dem Schieber (20) wirkverbundene Betätigungseinrichtung (24),
wobei die Längsnut (121) an einem Ende (12") des Innenrohrs (12) einen Schieber (124) bildet, der zur Längsachse des Innenrohrs (12) geneigt ist, um das Innenrohr (12) vom Außenrohr (14) zu trennen.

2. Rohranordnung nach Anspruch 1, die weiterhin ein Halteelement (126) zum Verhindern einer versehentlichen Trennung des Innenrohrs (12) vom Außenrohr (14) aufweist.

3. Rohranordnung nach Anspruch 2, wobei das Halteelement einen aus dem Innenrohr (12) nach außen ragenden Zahn (126) aufweist.

4. Rohranordnung nach Anspruch 3, wobei der Zahn in einer Position diametral gegenüber der Längsnut (121) angeordnet ist.

5. Rohranordnung nach Anspruch 1, wobei das Innenrohr (12) mit einem Zubehörteil (28) für einen Staubsauger verbunden ist.

6. Teleskopverlängerung (10) für einen Staubsauger, die eine Rohranordnung nach einem der Ansprüche 1 bis 4 aufweist.

7. Staubsauger umfassend einen Teleskopverlängerung (10) nach Anspruch 6 und/oder eine Rohranordnung nach Anspruch 5.

## Revendications

1. Agencement de tubes (10) comprenant :
a) un tube interne (12), et
b) un tube externe (14),
dans lequel ledit tube interne (12) et ledit tube externe (14) peuvent coulisser, de manière télescopique, l'un par rapport à l'autre,
dans lequel ledit tube interne (12) comprend, sur sa surface externe, une rainure longitudinale (121) et une pluralité de déformations (123) ayant une forme prédéterminée ;
c) un manchon (16) monté dans ledit tube externe (14), au niveau de l'une de ses extrémités (14') ;
d) un dispositif de fixation (18) configuré pour empêcher le coulissement du tube interne (12) par rapport au tube externe (14), lorsque ledit dispositif de fixation (18) est mis en prise au moins partiellement dans l'une desdites déformations (123) ;
e) un curseur (20) et des moyens élastiques (22), dans lequel ledit curseur (20) coopère avec ledit dispositif de fixation (18) sous l'action desdits moyens élastiques (22) ;
**caractérisé en ce que** l'agencement de tubes comprend en outre :
f) un dispositif d'actionnement (24) raccordé de manière opérationnelle audit curseur (20),
dans lequel ladite rainure longitudinale (121) forme, au niveau d'une extrémité (12") du tube interne (12), une glissière (124) inclinée vers l'axe longitudinal du tube interne (12) pour séparer le tube interne (12) du tube externe (14).

2. Agencement de tubes selon la revendication 1, comprenant en outre un élément de retenue (126) pour empêcher la séparation accidentelle du tube interne (12) du tube externe (14).

3. Agencement de tubes selon la revendication 2, dans lequel ledit élément de retenue comprend une dent (126) faisant saillie vers l'extérieur du tube interne (12).

4. Agencement de tubes selon la revendication 3, dans lequel ladite dent est disposée dans une position diamétralement opposée à la rainure longitudinale (121).

5. Agencement de tubes selon la revendication 1, dans lequel le tube interne (12) est raccordé à un accessoire (28) pour un aspirateur.

6. Rallonge télescopique (10) pour un aspirateur comprenant un agencement de tubes selon l'une quelconque des revendications 1 à 4.

7. Aspirateur comprenant une rallonge télescopique (10) selon la revendication 6 et/ou un agencement de tubes selon la revendication 5.
